# EUROPEAN PATENT APPLICATION

(11) **EP 4 238 679 A1**
(43) Date of publication of application: **06.09.2023**
(21) Application number: 21900529.5
(22) Date of filing: 29.11.2021
(51) Int. Cl.: B23H 1/00, B23H 7/02

(54) **MACHINE TOOL**

(30) Priority: 04.12.2020 JP 2020005255 U
(71) Applicant: FANUC CORPORATION, Oshino-mura Minamitsuru-gun Yamanashi 401-0597 (JP)
(72) Inventor: YAMASAKI Mizuho, 401-0597 Yamanashi (JP)
(74) Representative: Keil & Schaafhausen Patentanwälte PartGmbB
(86) International application number: PCT/JP2021/043541
(87) International publication number: WO 2022/118776

(57) **Abstract**

This machine tool (10) comprises: a saddle (14) which moves relative to a bed (12) in a first direction; a table (16) which moves relative to the saddle (14) in a second direction perpendicular to the first direction; and a first clamp member (60) which is fixed to the bed (12) and the table (16) and fixes the relative position of the bed (12) and the table (16).

## Description

### TECHNICAL FIELD

The present invention relates to a machine tool for machining a workpiece using a tool.

### BACKGROUND ART

As a machine tool, there is a wire electrical discharge machine. JP 2018-069409 A discloses a wire electrical discharge machine that machines a workpiece by generating an electric discharge at an electrode gap between the workpiece in a working fluid and a wire electrode.

In the wire electrical discharge machine disclosed in JP 2018-069409 A, a saddle (X-axis saddle) is mounted on a bed, a table (Y-axis saddle) is mounted on the saddle, and a UV-axis saddle (V-axis saddle) is mounted on a column installed to stand on the bed. A UV-axis table (U-axis saddle) is movably attached to a side surface portion of the UV-axis saddle, and a quill (Z-axis saddle) is movably attached to a side surface portion of the UV-axis table.

### SUMMARY OF THE INVENTION

When the wire electrical discharge machine is transported, each of the saddle, the table, the UV-axis saddle, the UV-axis table, and the quill is clamped so as not to move. Specifically, the saddle is clamped to the bed, the table is clamped to the saddle, the UV-axis saddle is clamped to the column, the UV-axis table is clamped to the UV-axis saddle, and the quill is clamped to the UV-axis table.

However, since the saddle, the table, the UV-axis saddle, the UV-axis table, and the quill are individually clamped, the time required for the clamping work tends to be long. As a result, preparation for transportation of the wire electrical discharge machine has been troublesome.

The present invention has the object of solving the aforementioned problem.

According to an aspect of the present invention, there is provided a machine tool that machines a workpiece using a tool, the machine tool including: a saddle configured to move relative to a bed in a first direction; a table configured to move relative to the saddle in a second direction orthogonal to the first direction; and a first clamp member configured to be fixed to the bed and the table and thereby fix a relative position between the bed and the table.

According to the aspect of the present invention, movement of the saddle can be suppressed by the first clamp member without clamping the saddle. Therefore, as compared with the case where the saddle and the table are individually clamped by the clamp members, the number of the clamp members can be reduced and the time required for the clamping work can be shortened, and as a result, the transportation can be simplified.

### BRIEF DESCRIPTION OF DRAWINGS

FIG. 1 is a side view showing a configuration of a machine tool;
FIG. 2 is a front view showing the configuration of the machine tool;
FIG. 3 is a view showing a mounted state of a first clamp member;
FIG. 4A is a view showing a mounted state of a second clamp member and a third clamp member;
FIG. 4B is a view showing the mounted state of the second clamp member and the third clamp member from a viewpoint different from that of FIG. 4A;
FIG. 5 is a view showing a state in which the first clamp member, the second clamp member, and the third clamp member are being assembled; and
FIG. 6 is a view showing a state in which the first clamp member, the second clamp member, and the third clamp member have been assembled as one assembly.

### DETAILED DESCRIPTION OF THE INVENTION

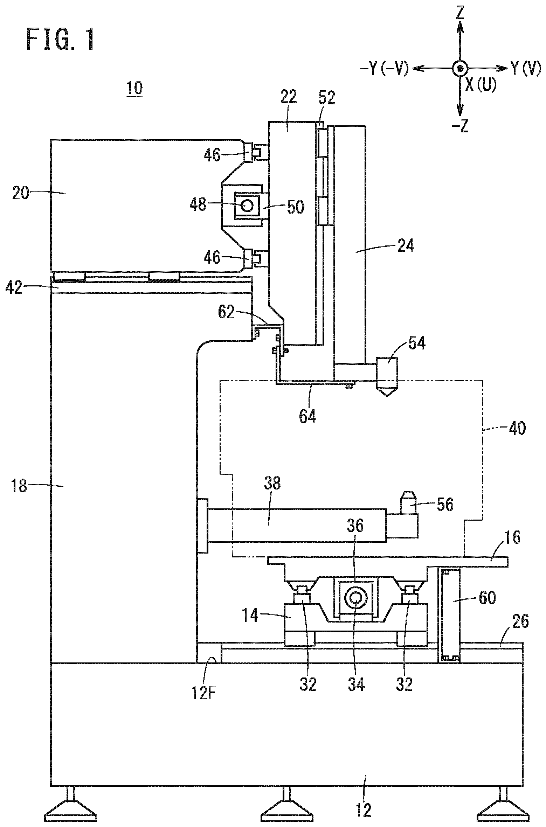

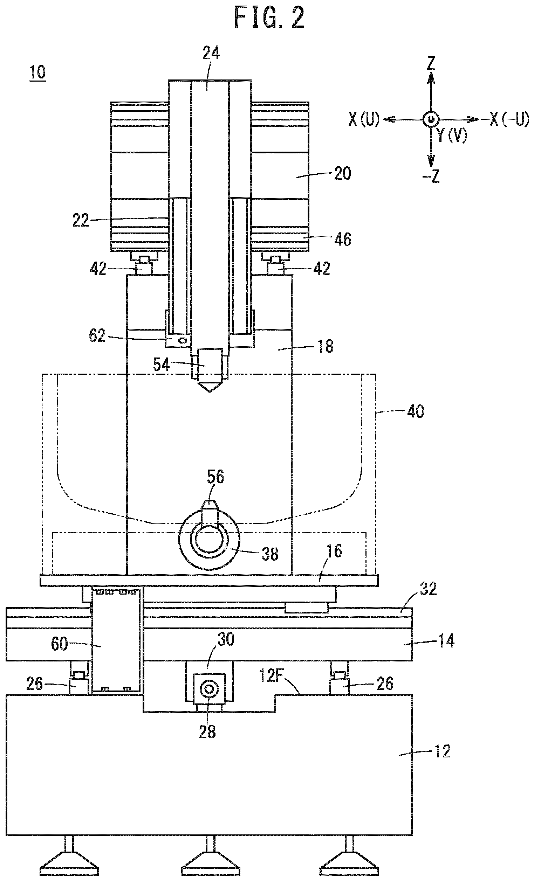

FIG. 1 is a side view showing a configuration of a machine tool 10. FIG. 2 is a front view showing the configuration of the machine tool 10. In the present embodiment, the machine tool 10 is a wire electrical discharge machine that machines a workpiece by generating an electrical discharge at an electrode gap between the workpiece and a wire electrode in a working fluid. The machine tool 10 includes a bed 12, a saddle 14, a table 16, a column 18, a UV-axis saddle 20, a UV-axis table 22, and a quill 24.

The bed 12 is a machine base of the machine tool 10. The bed 12 is provided on a foundation such as the ground or a floor. The bed 12 has a mounting surface 12F for mounting an object to be mounted.

The saddle 14 is movably connected to a first guide rail 26 for guiding the saddle 14. The first guide rail 26 is provided on the mounting surface 12F of the bed 12 and extends in a first direction. The number of the first guide rails 26 may be one, or may be plural. In the present embodiment, a pair of the first guide rails 26 are provided on the mounting surface 12F of the bed 12 at an interval therebetween (see FIG. 2).

A first drive shaft 28 is disposed between the pair of first guide rails 26. The first drive shaft 28 is connected to a motor shaft of a saddle driving motor and extends in the first direction. The first drive shaft 28 is provided with a first sliding portion 30. The saddle 14 is fixed to the first sliding portion 30. The first sliding portion 30 slides on the first drive shaft 28 by rotation of the saddle driving motor.

The saddle 14 moves on the first guide rails 26 together with the first sliding portion 30 according to the rotation of the saddle driving motor. That is, the saddle 14 moves relative to the bed 12 in the first direction. When the saddle driving motor rotates in the forward direction, the saddle 14 moves toward the positive side in the first direction. On the other hand, when the saddle driving motor rotates in the reverse direction, the saddle 14 moves toward the negative side in the first direction. In the present embodiment, the first direction is the Y direction corresponding to the Y-axis of the machine coordinate system defined by the machine tool 10. The positive side in the Y direction (+Y side) is the front side of the machine tool 10, and the negative side in the Y direction (-Y direction) is the rear side of the machine tool 10.

The table 16 is movably connected to a second guide rail 32 for guiding the table 16. The second guide rail 32 is provided on the upper surface of the saddle 14 and extends in a second direction orthogonal to the first direction in the plane. The number of the second guide rails 32 may be one or more. In the present embodiment, a pair of the second guide rails 32 are provided on an upper surface of the saddle 14 at an interval therebetween (see FIG. 1).

A second drive shaft 34 is disposed between the pair of second guide rails 32. The second drive shaft 34 is connected to a motor shaft of a table driving motor and extends in the second direction. The second drive shaft 34 is provided with a second sliding portion 36. The table 16 is fixed to the second sliding portion 36. The second sliding portion 36 slides on the second drive shaft 34 by rotation of the table driving motor.

The table 16 moves on the second guide rails 32 together with the second sliding portion 36 according to the rotation of the table driving motor. That is, the table 16 moves relative to the saddle 14 in the second direction. When the table driving motor rotates in the forward direction, the table 16 moves toward the positive side in the second direction. On the other hand, when the table driving motor rotates in the reverse direction, the table 16 moves toward the negative side in the second direction. In the present embodiment, the second direction is the X direction corresponding to the X-axis of the machine coordinate system defined by the machine tool 10. The positive side in the X direction (+X side) is the right side of the machine tool 10, and the negative side in the X direction (-X direction) is the left side of the machine tool 10.

The column 18 is a support post member and is disposed to stand on the mounting surface 12F of the bed 12. An arm 38 is fixed to the front surface of the column 18. The arm 38 extends in the Y direction and penetrates through a side wall of a work pan (work tank) 40 placed on the table 16. The side wall of the work pan 40 is provided with a seal mechanism for sealing a gap between the arm 38 and the work pan 40. The seal mechanism seals the gap between the work pan 40 and the arm 38 even when the work pan 40 moves together with the movement of at least one of the saddle 14 or the table 16.

The UV-axis saddle 20 is movably connected to a third guide rail 42 for guiding the UV-axis saddle 20. The third guide rail 42 is provided on the upper surface of the column 18 and extends in the third direction. The number of the third guide rails 42 may be one or may be plural. In the present embodiment, a pair of the third guide rails 42 are provided on the upper surface of the column 18 at an interval therebetween (see FIG. 2).

A third drive shaft (not shown) is disposed between the pair of third guide rails 42. The third drive shaft is connected to a motor shaft of the UV-axis saddle driving motor and extends in the third direction. The third drive shaft is provided with a third sliding portion (not shown). The UV-axis saddle 20 is fixed to the third sliding portion. The third sliding portion slides on the third drive shaft by rotation of the UV-axis saddle driving motor.

The UV-axis saddle 20 moves on the third guide rails 42 together with the third sliding portion in accordance with the rotation of the UV-axis saddle driving motor. That is, the UV-axis saddle 20 moves relative to the column 18 in the third direction. When the UV-axis saddle driving motor rotates in the forward direction, the UV-axis saddle 20 moves toward the positive side in the third direction. On the other hand, when the UV-axis saddle driving motor rotates in the reverse direction, the UV-axis saddle 20 moves toward the negative side in the third direction. In the present embodiment, the third direction is a V direction corresponding to the V-axis of the machine coordinate system defined by the machine tool 10. The V direction is the same direction as the Y direction in the present embodiment. Alternatively, the V direction may be the same direction as the X direction.

The UV-axis table 22 is movably connected to a fourth guide rail 46 for guiding the UV-axis table 22. The fourth guide rail 46 is provided on the front surface of the UV-axis saddle 20 and extends in a fourth direction orthogonal to the third direction. The number of the fourth guide rails 46 may be one or may be plural. In the present embodiment, a pair of the fourth guide rails 46 are provided on the front surface of the UV-axis saddle 20 at an interval therebetween (see FIG. 1).

A fourth drive shaft 48 is disposed between the pair of fourth guide rails 46. The fourth drive shaft 48 is connected to the motor shaft of the UV-axis table driving motor and extends in the fourth direction. The fourth drive shaft 48 is provided with a fourth sliding portion 50. The UV-axis table 22 is fixed to the fourth sliding portion 50. The fourth sliding portion 50 slides on the fourth drive shaft 48 by rotation of the UV-axis table driving motor.

The UV-axis table 22 moves on the fourth guide rails 46 together with the fourth sliding portion 50 according to the rotation of the UV-axis table driving motor. That is, the UV-axis table 22 relatively moves in the fourth direction with respect to the UV-axis saddle 20. When the UV-axis table driving motor rotates in the forward direction, the UV-axis table 22 moves toward the positive side in the fourth direction. On the other hand, when the UV-axis table driving motor rotates in the reverse direction, the UV-axis table 22 moves toward the negative side in the fourth direction. In the present embodiment, the fourth direction is a U direction corresponding to the U-axis of the machine coordinate system defined by the machine tool 10. The U direction is the same direction as the X direction in the present embodiment. Alternatively, when the V direction is the same direction as the X direction, the U direction may be the same direction as the Y direction.

The quill 24 is movably connected to a fifth guide rail 52 for guiding the quill 24. The fifth guide rail 52 is provided on the front surface of the UV-axis table 22 and extends in a fifth direction orthogonal to the first direction and the second direction. The number of the fifth guide rails 52 may be one or may be plural. In the present embodiment, a pair of the fifth guide rails 52 is provided on the front surface of the UV-axis table 22 at an interval therebetween (see FIG. 1).

A fifth drive shaft (not shown) is disposed between the pair of fifth guide rails 52. The fifth drive shaft is connected to the motor shaft of the quill driving motor and extends in the fifth direction. The fifth drive shaft is provided with a fifth sliding portion (not shown). The quill 24 is fixed to the fifth sliding portion. The fifth sliding portion slides on the fifth drive shaft by rotation of the quill driving motor.

The quill 24 moves on the fifth guide rails 52 together with the fifth sliding portion according to the rotation of the quill driving motor. That is, the quill 24 moves relative to the UV-axis table 22 in the fifth direction. When the quill driving motor rotates in the forward direction, the quill 24 moves toward the positive side in the fifth direction. On the other hand, when the quill driving motor rotates in the reverse direction, the quill 24 moves toward the negative side in the fifth direction. In the present embodiment, the fifth direction is the Z direction corresponding to the Z-axis of the machine coordinate system defined by the machine tool 10. The positive side in the Z direction (+Z side) is the upper side of the machine tool 10, and the negative side in the Z direction (-Z side) is the lower side of the machine tool 10. The downward direction is the direction in which gravity acts.

The quill 24 is provided with an upper guide portion 54. The arm 38 is provided with a lower guide portion 56. The upper guide portion 54 guides the wire electrode fed from the wire feed mechanism, to the lower guide portion 56, while supporting the wire electrode. The lower guide portion 56 guides the wire electrode fed from the wire feed mechanism via the upper guide portion 54, to a wire winding mechanism, while supporting the wire electrode.

When the machine tool 10 is transported, the saddle 14, the table 16, the column 18, the UV-axis saddle 20, the UV-axis table 22, and the quill 24 are disposed at predetermined positions (transport fixed positions). Each of the transport fixed positions is a position that is predetermined as a relative position, at the time of transport, with respect to the bed 12. In this case, the machine tool 10 includes a first clamp member 60, a second clamp member 62, and a third clamp member 64.

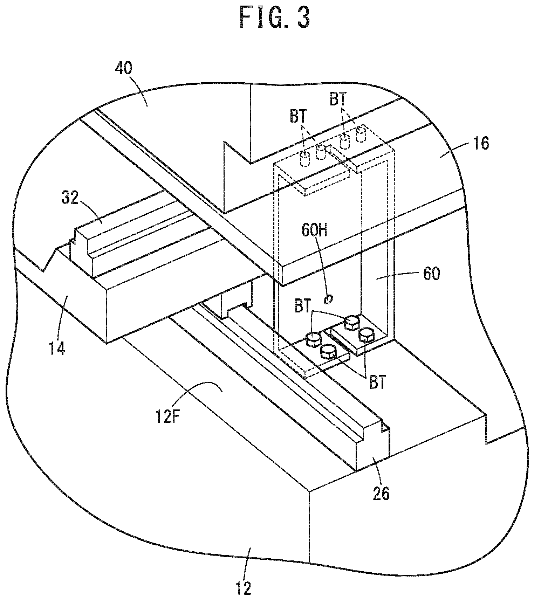

FIG. 3 is a view showing a mounted state of the first clamp member 60. The first clamp member 60 is a member that fixes the relative position between the bed 12 and the table 16. The first clamp member 60 connects the bed 12 and the table 16 disposed at the transport fixed position, and holds the table 16 at the transport fixed position with respect to the bed 12. Further, the first clamp member 60 keeps the saddle 14 disposed at the transport fixed position from moving. The first clamp member 60 is fixed to each of the bed 12 and the table 16 by bolts BT.

In addition, a bolt hole into which the bolt BT can be screwed is formed in each of the bed 12 and the table 16. The bolt holes formed in each of the bed 12 and the table 16 are exposed without being covered with a cover or the like. Therefore, the bolt holes are easily visually recognized, and an operation of exposing the bolt holes from a cover or the like is not required when the first clamp member 60 is mounted.

The number of the bolt holes formed in the bed 12 and the number of the bolt holes formed in the table 16 may each be one or may each be two or more. FIG. 3 shows an example in which four bolt holes are formed in the bed 12 and four bolt holes are formed in the table 16.

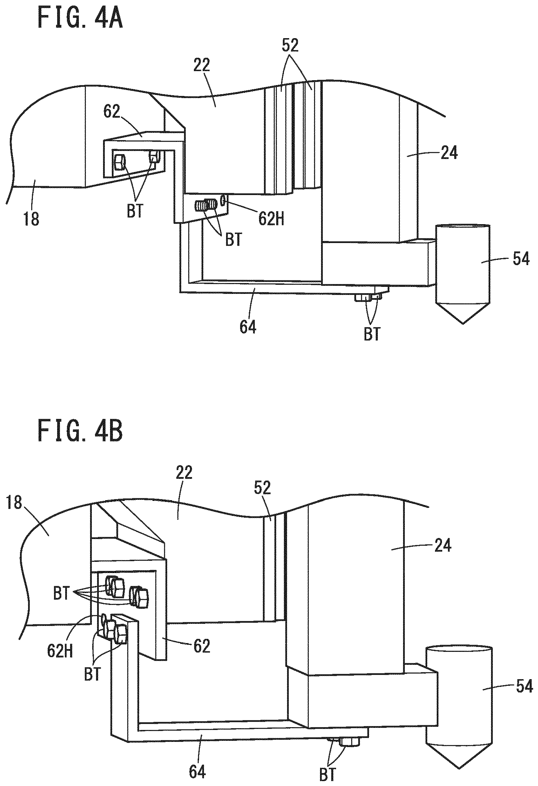

FIG. 4A is a view showing a mounted state of the second clamp member 62 and the third clamp member 64. FIG. 4B is a view showing the mounted state of the second clamp member 62 and the third clamp member 64 from a viewpoint different from that of FIG. 4A.

The second clamp member 62 is a member that fixes the relative position between the column 18 and the UV-axis table 22. The second clamp member 62 connects the column 18 and the UV-axis table 22 that are disposed at the respective transport fixed positions, and holds the column 18 and the UV-axis table 22 at the transport fixed positions with respect to the bed 12. Further, the second clamp member 62 keeps the UV-axis saddle 20 disposed at the transport fixed position from moving. The second clamp member 62 is fixed to each of the column 18 and the UV-axis table 22 by bolts BT.

In addition, a bolt hole into which the bolt BT can be screwed is formed in each of the column 18 and the UV-axis table 22. The bolt holes formed in each of the column 18 and the UV-axis table 22 are exposed without being covered with a cover or the like. Therefore, the bolt holes are easily visually recognized, and an operation of exposing the bolt holes from a cover or the like is not required when the second clamp member 62 is mounted.

The number of the bolt holes formed in the column 18 and the number of the bolt holes formed in the UV-axis table 22 may each be one or may each be two or more. FIGS. 4A and 4B show an example in which two bolt holes are formed in the column 18 and four bolt holes are formed in the UV-axis table 22.

The third clamp member 64 is a member that fixes the relative position of the quill 24 with respect to the second clamp member 62. The third clamp member 64 connects the second clamp member 62 and the quill 24 that is disposed at the transport fixed position to hold the quill 24 at the transport fixed position with respect to the bed 12. The second clamp member 62 in this case is in a state of connecting the column 18 and the UV-axis table 22. The third clamp member 64 is fixed to each of the second clamp member 62 and the quill 24 by bolts BT.

In addition, a bolt hole into which the bolt BT can be screwed is formed in each of the second clamp member 62 and the quill 24. The bolt holes formed in each of the second clamp member 62 and the quill 24 are exposed without being covered with a cover or the like. Therefore, the bolt holes are easily visually recognized, and an operation of exposing the bolt holes from a cover or the like is not required when the third clamp member 64 is mounted.

The number of the bolt holes formed in the second clamp member 62 and the number of the bolt holes formed in the quill 24 may each be one or may each be two or more. FIGS. 4A and 4B show an example in which two bolt holes are formed in the second clamp member 62 and two bolt holes are formed in the quill 24.

The first clamp member 60, the second clamp member 62, and the third clamp member 64 are removed from the machine tool 10 at least when the workpiece is machined. The first clamp member 60, the second clamp member 62, and the third clamp member 64 removed from the machine tool 10 are formed to be able to be assembled together.

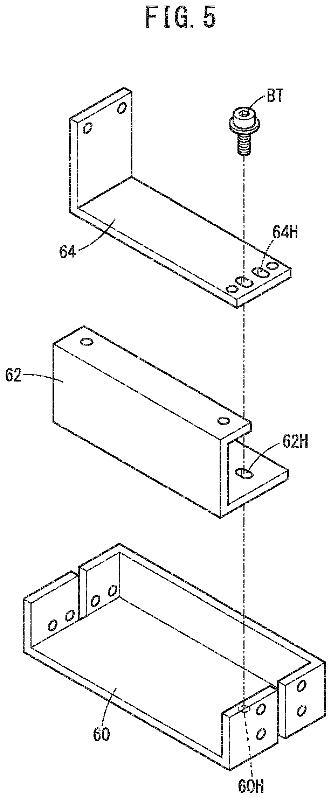

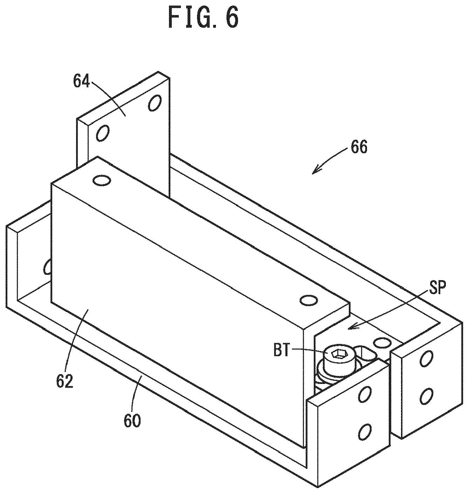

FIG. 5 is a view showing a state in which the first clamp member 60, the second clamp member 62, and the third clamp member 64 are being assembled. FIG. 6 is a view showing a state in which the first clamp member 60, the second clamp member 62, and the third clamp member 64 have been assembled into one assembly 66.

In order to assemble the members into the assembly 66, first, the second clamp member 62 and the third clamp member 64 are sequentially stacked on the first clamp member 60. Next, the bolt BT is passed through the through hole 62H formed in the second clamp member 62 and the through hole 64H formed in the third clamp member 64. Thereafter, the bolt BT is screwed into the bolt hole 60H formed in the first clamp member 60. Thus, the assembly 66 is assembled. The bolt BT used for assembling the assembly 66 is one of the plurality of bolts BT used for fixing the first clamp member 60, the second clamp member 62, and the third clamp member 64.

When the first clamp member 60, the second clamp member 62, and the third clamp member 64 are assembled as one assembly 66, a storage space SP is formed in the assembly 66. The storage space SP stores therein bolts BT other than the bolt BT used to assemble the assembly 66, from among the plurality of bolts BT used to fix the first clamp member 60, the second clamp member 62, and the third clamp member 64.

As described above, in the machine tool 10 according to the present embodiment, when the machine tool is transported, the first clamp member 60 fixes the relative position between the bed 12 and the table 16 that is disposed at the transport fixed position. Thus, the movement of the saddle 14 can be suppressed by the first clamp member 60 without clamping the saddle 14. Therefore, as compared with the case where the saddle 14 and the table 16 are individually clamped by clamp members, the number of the clamp members can be reduced and the time required for the clamping work can be shortened. As a result, the transportation can be simplified.

Furthermore, in the machine tool 10 of the present embodiment, when the machine tool is transported, the second clamp member 62 fixes the relative position between the column 18 and the UV-axis table 22 disposed at the transport fixed position. Further, the third clamp member 64 fixes the relative position of the quill 24 with respect to the second clamp member 62. Accordingly, even if the UV-axis saddle 20 is not clamped, the second clamp member 62 can keep the UV-axis saddle 20 from moving, and can fix the relative position of the quill 24 with respect to the second clamp member 62. Therefore, as compared with the case where the UV-axis saddle 20, the UV-axis table 22, and the quill 24 are individually clamped by the clamp members, it is possible to reduce the number of clamp members and to shorten the time required for the clamping work. As a result, the transportation can be simplified.

### [Modifications]

As the machine tool 10, a machining device that machines a workpiece by pressing a tool against a workpiece may be employed instead of the wire electrical discharge machine of the embodiment. Note that such a machining device includes the saddle 14, the table 16, and the quill 24, but does not include the UV-axis saddle 20 or the UV-axis table 22. The quill 24 of the machining device is movably mounted on the column 18.

The inventions that can be understood from the above-described embodiment and modifications are described below.

The present invention is characterized by the machine tool (10) that machines a workpiece using a tool, the machine tool including: the saddle (14) configured to move relative to the bed (12) in the first direction; the table (16) configured to move relative to the saddle in the second direction orthogonal to the first direction; and the first clamp member (60) configured to be fixed to the bed and the table and thereby fix the relative position between the bed and the table.

Accordingly, the movement of the saddle can be suppressed by the first clamp member without clamping the saddle. Therefore, as compared with the case where the saddle and the table are individually clamped by the clamp members, the number of the clamp members can be reduced and the time required for the clamping work can be shortened, and as a result, the transportation can be simplified.

The machine tool (10) is the wire electrical discharge machine that machines the workpiece by generating an electrical discharge at the electrode gap between the wire electrode and the workpiece in the working fluid. The machine tool further includes: the UV-axis saddle (20) configured to move relative to the column (18) disposed so as to stand on the bed, in the third direction; the UV-axis table (22) configured to move relative to the UV-axis saddle in the fourth direction orthogonal to the third direction; the quill (24) configured to move relative to the UV-axis table in the fifth direction orthogonal to the first direction and to the second direction; the second clamp member (62) configured to be fixed to the column and the UV-axis table and thereby fix the relative position between the column and the UV-axis table; and the third clamp member (64) configured to be fixed to the second clamp member and the quill and thereby fix the relative position of the quill with respect to the second clamp member.

With the above configuration, without clamping the UV-axis saddle, the relative position of the quill with respect to the second clamp member can be fixed while the movement of the UV-axis saddle is suppressed by the second clamp member. Therefore, as compared with the case where the UV-axis saddle, the UV-axis table, and the quill are individually clamped by the clamp members, the number of the clamp members can be reduced and the time required for the clamping work can be shortened, and as a result, the transportation can be simplified.

The first direction and the third direction may be the same direction, and the second direction and the fourth direction may be the same direction. With this configuration, the saddle and the UV-axis saddle can relatively move in the same direction, and the table and the UV-axis table can relatively move in the same direction.

## Claims

1. A machine tool (10) that machines a workpiece using a tool, the machine tool comprising:
a saddle (14) configured to move relative to a bed (12) in a first direction;
a table (16) configured to move relative to the saddle in a second direction orthogonal to the first direction; and
a first clamp member (60) configured to be fixed to the bed and the table and thereby fix a relative position between the bed and the table.

2. The machine tool according to claim 1, wherein
the machine tool is a wire electrical discharge machine that machines the workpiece by generating an electrical discharge at an electrode gap between a wire electrode and the workpiece in a working fluid,
the machine tool further comprising:
a UV-axis saddle (20) configured to move relative to a column (18) disposed so as to stand on the bed, in a third direction;
a UV-axis table (22) configured to move relative to the UV-axis saddle in a fourth direction orthogonal to the third direction;
a quill (24) configured to move relative to the UV-axis table in a fifth direction orthogonal to the first direction and to the second direction;
a second clamp member (62) configured to be fixed to the column and the UV-axis table and thereby fix a relative position between the column and the UV-axis table; and
a third clamp member (64) configured to be fixed to the second clamp member and the quill and thereby fix a relative position of the quill with respect to the second clamp member.

3. The machine tool according to claim 2, wherein
the first direction and the third direction are a same direction, and the second direction and the fourth direction are a same direction.
